# EUROPÄISCHE PATENTANMELDUNG

(11) **EP 4 530 328 A1**
(43) Veröffentlichungstag der Anmeldung: **02.04.2025**
(21) Anmeldenummer: 24202846.2
(22) Anmeldetag: 26.09.2024
(51) Int. Cl.: C09J 7/22, C09J 7/38, C09J 153/02

(54) **HAFTKLEBEMASSE UND WIEDERABLÖSBARE SELBSTKLEBEPRODUKTE UMFASSEND DIE HAFTKLEBEMASSE**

(30) Priorität: 27.09.2023 DE 102023126363
(71) Anmelder: tesa SE, 22848 Norderstedt (DE)
(72) Erfinder: DOLLASE, Thilo, 22848 Norderstedt (DE); GARBERS, Julia, 22848 Norderstedt (DE); VON ALLWÖRDEN, Dörte, 22848 Norderstedt (DE)
(74) Vertreter: tesa SE

(57) **Zusammenfassung**

Haftklebemasse enthaltend:
a) mindestens 28 Gew.-% und höchstens 60 Gew.-% einer Elastomerkomponente, wobei
i. die Elastomerkomponente 30 bis 64 Gew.-% oder zumindest 60 Gew.-% und bevorzugt höchstens 90 Gew.-%, jeweils bezogen auf die Elastomerkomponente, wenigstens ein hydriertes Polyvinylaromat-Polydien-Blockcopolymer mit einem Polyvinylaromatenanteil von mindestens 18 Gew.-% und einem Peak-Molekulargewicht von 100.000 bis 500.000 g/mol, bestimmt gemäß GPC (Test la), enthält,
ii. die Polydien-Blöcke im Wesentlichen voll hydriert sind,
iii. das hydrierte Polyvinylaromat-Polydien-Blockcopolymer einen ABA-Aufbau, (AB)ₙZ-Aufbau mit n = 2 oder radialen (AB)ₙ-Aufbau oder radialen (AB)ₙ-Z-Aufbau mit n ≥ 3 aufweist, wobei A = Polyvinylaromat, B = Ethylen und Butylen oder Ethylen und Propylen und Z = Derivat einer Kopplungssubstanz sind und wobei der Ethylen-Anteil in den B-Blöcken bevorzugt mindestens 50 Gew.-% beträgt, und
iv. die Elastomerkomponente 36 Gew.-%, bevorzugt 36 bis 70 Gew.-%, und bevorzugt maximal 50 Gew.-%, besonders bevorzugt maximal 45 Gew.-%, zumindest einer Sorte eines hydrierten Diblockcopolymers mit einem A'B'-Aufbau oder (A'B')ₙZ-Aufbau mit n = 1 enthält, wobei A' = Polyvinylaromat, B' = Ethylen und Butylen oder Ethylen und Propylen, Z = Derivat einer Kopplungssubstanz ist und A' = A und B` = B sein kann,

b) eine Klebharzkomponente,
c) optional eine Weichmacherkomponente,
d) optional mindestens 2,5 Gew.-% bis 22 Gew.-%, bevorzugt mindestens 4 Gew.-% bis zu 18 Gew.-%, einer Verstärkungskomponente, die wenigstens ein Harz mit einem MMAP-Wert zwischen -10 °C und +30 °C, bevorzugt zwischen 0 °C und +20 °C, und einem Erweichungspunkt von mindestens 140 °C ist,
e) optional weitere Zuschlagsstoffe,
wobei sich der Anteil der Elastomerkomponente auf das Gesamtgewicht der Haftklebemasse bezieht.

## Beschreibung

Die vorliegende Erfindung betrifft eine Haftklebemasse sowie, insbesondere doppelseitig klebende, Selbstklebeprodukte, die durch dehnendes Verstrecken aus einer Verklebung wieder ablösbar sind und die Haftklebemasse umfassen.

Klebstoffe und Klebebänder werden im Allgemeinen verwendet, um zwei Substrate zusammenzufügen, so dass eine dauerhafte oder permanente Verbindung entsteht. Nicht nur zuletzt sind Trends erkennbar, dass solche permanenten Verbindungen zum Zwecke des Recyclings wieder aufgetrennt werden sollen. Entsprechend werden Klebelösungen gesucht, die zunächst anwendungsgerechte Verklebungseigenschaften bieten, zum anderen aber auch wiederablösbar sind. Eine Herausforderung dabei besteht allein darin, Verklebungsleistungen entsprechend immer anspruchsvolleren Anwendungen zum Beispiel im Hinblick auf die zu verklebenden Materialien, aber auch an die Beständigkeit der Klebung zu realisieren. So werden beispielsweise für Verklebungen im Automobilbereich hohe Wärmescherfestigkeiten gefordert und dies auch auf Kunststoffanbauteilen. Ein gängiges Material für solche Anbauteile ist PP/EPDM, PP/EPM oder PP/EPR. Die Verklebung solcher Materialien stellt eine besondere Herausforderung dar. Darüber hinaus besteht die Notwendigkeit, auch Bauteile zu verkleben, die keine perfekte Oberflächenglätte oder eine gewisse Rauigkeit aufweisen. Insbesondere hier wird ein besonders ausgeprägtes initiales Auffließvermögen des Klebstoffsystems gefordert. Trotzdem ist auch hier häufig rückstandsfreie Wiederablösbarkeit erforderlich.

Durch dehnendes Verstrecken wiederablösebare Selbstklebeprodukte, die eine oder mehrere Schichten auf Basis von Styrol-Blockcopolymeren enthalten, sind bekannt.

Aus der DE 100 03 318 A1, DE 102 52 088 A1, DE 102 52 089 A1 und DE 10 2007 021 504 A1 sind Ansätze bekannt, auf Basis hydrierter Polystyrol-Polydien-Blockcopolymeren Formulierungen vorzuschlagen, die für durch dehnendes Verstrecken wiederablösbare Selbstklebeprodukte geeignet sind.

Es ist aber weiterhin ein Bedürfnis robuste Klebemassen und entsprechende Produkte umfassend diese Klebemassen zu entwickeln, die ein ausgeprägtes initiales Auffließvermögen, und damit einen hohen Tack, einerseits und eine rückstandsfreie Wiederablösbarkeit andererseits bieten, obwohl diese Anforderungen im Zielkonflikt miteinander stehen und sich somit quasi widersprechen. Das Auffließvermögen ist nämlich dann besonders ausgeprägt, wenn das Klebsystem eine gute Fließfähigkeit, also eine geringe innere Festigkeit (Kohäsion) aufweist, während eine rückstandsfreie Ablösbarkeit vor allem von Klebsystemen mit hoher Kohäsion erwartet wird.

Der vorliegenden Erfindung lag daher die Aufgabe zugrunde, eine Haftklebemasse und ein durch dehnendes Verstrecken wiederablösbares Selbstklebeprodukt umfassend die Haftklebemasse bereitzustellen, welche sich durch ein verbessertes initiales Auffließvermögen, und damit eine Verbesserung im Tack, auszeichnen. Gleichzeitig sollen eine hohe Langzeitstabilität sowie Temperaturstabilität und dennoch eine Wiederablösbarkeit sichergestellt werden. Zudem sollen die Haftklebemasse bzw. das Selbstklebeprodukt trotz der Ablösbarkeit eine gute Verklebungsleistung, insbesondere auf polaren Untergründen, wie auf Stahl, und ggf. auch auf unpolaren Untergründen wie PP/EPDM, PP/EPM oder PP/EPR aufweisen.

Gelöst wird diese Aufgabe in unerwarteter Weise durch die Haftklebemasse, wie sie in Anspruch 1 beschrieben ist, und durch das Selbstklebeprodukt, wie in Anspruch 13 beschrieben. Gegenstand der abhängigen Ansprüche sind vorteilhafte Fortbildungen des Erfindungsgegenstandes. Des Weiteren ist Teil der Erfindung ein verklebter Verbund. Weitere vorteilhafte Ausgestaltungen der Erfindung ergeben sich aus der Beschreibung wie nachfolgend ausgeführt.

Solche und weitere Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden.

Merkmale bevorzugter Selbstklebeprodukte sowie Verwendungen ergeben sich aus den Merkmalen bevorzugter Haftklebemassen.

Ein erster Gegenstand der vorliegenden Erfindung ist eine Haftklebemasse enthaltend:
a) mindestens 28 Gew.-% und höchstens 60 Gew.-% einer Elastomerkomponente, wobei
   i. die Elastomerkomponente 30 bis 64 Gew.-% oder zumindest 60 Gew.-% und bevorzugt höchstens 90 Gew.-%, jeweils bezogen auf die Elastomerkomponente, wenigstens ein hydriertes Polyvinylaromat-Polydien-Blockcopolymer mit einem Polyvinylaromatenanteil von mindestens 18 Gew.-% und einem Peak-Molekulargewicht von 100.000 bis 500.000 g/mol, bestimmt gemäß GPC (Test la), enthält,
   ii. die Polydien-Blöcke im Wesentlichen voll hydriert sind,
   iii. das hydrierte Polyvinylaromat-Polydien-Blockcopolymer einen ABA-Aufbau, (AB)ₙZ-Aufbau mit n = 2 oder radialen (AB)ₙ-Aufbau oder radialen (AB)ₙ-Z-Aufbau mit n ≥ 3 aufweist, wobei A = Polyvinylaromat, B = Ethylen und Butylen oder Ethylen und Propylen und Z = Derivat einer Kopplungssubstanz sind und wobei der Ethylen-Anteil in den B-Blöcken bevorzugt mindestens 50 Gew.-% beträgt, und
   iv. die Elastomerkomponente 36 Gew.-%, bevorzugt 36 bis 70 Gew.-%, und bevorzugt maximal 50 Gew.-%, besonders bevorzugt maximal 45 Gew.%, zumindest einer Sorte eines hydrierten Diblockcopolymers mit einem A'B'-Aufbau oder (A'B')ₙZ-Aufbau mit n = 1 enthält, wobei A' = Polyvinylaromat, B' = Ethylen und Butylen oder Ethylen und Propylen, Z = Derivat einer Kopplungssubstanz ist und A' = A und B' = B sein kann,
b) eine Klebharzkomponente,
c) optional eine Weichmacherkomponente,
d) optional mindestens 2,5 Gew.-% bis 22 Gew.-%, bevorzugt mindestens 4 Gew.-% bis 18 Gew.-%, einer Verstärkungskomponente, die wenigstens ein Harz mit einem MMAP-Wert zwischen -10 °C und +30 °C, bevorzugt zwischen 0 °C und +20 °C, und einem Erweichungspunkt von mindestens 140 °C ist,
e) optional weitere Zuschlagsstoffe,
wobei sich der Anteil der Elastomerkomponente auf das Gesamtgewicht der Haftklebemasse bezieht.

Unter "im Wesentlichen voll hydriert" ist im Rahmen der vorliegenden Erfindung ein Hydrierungsgrad von wenigstens 90 %, vorzugsweise von wenigstens 95 % und besonders bevorzugt von wenigstens 99 %, zu verstehen. Unter hydrierten Blockcopolymeren werden im Rahmen der vorliegenden Erfindung solche verstanden, bei denen die Polydien-Blöcke im Wesentlich voll hydriert vorliegen.

Beispiele für erfindungsgemäß einsetzbare Kopplungssubstanzen sind unter anderem bei Holden zu finden (G. Holden, D. R. Hansen in "Thermoplastic Elastomers", G. Holden, H. R. Kricheldorf, R. P. Quirk (Hrsg.), 3. Aufl. 2004, C. Hanser, München, S. 49f), ohne sich hierdurch einschränken zu wollen.

Überraschenderweise ist es mit der vorliegenden Erfindung gelungen, eine Haftklebemasse und ein entsprechendes Selbstklebeprodukt bereitzustellen, welche ein verbessertes initiales Auffließvermögen und damit verbesserte Tack-Eigenschaften aufweisen. Dies ist vorliegend insbesondere überraschenderweise in einem System auf Basis von hydrierten Polyvinylaromat-Polydien-Blockcopolymeren gelungen, was für den Fachmann ein besonderes Hindernis war.

Dabei weisen die Haftklebemasse bzw. das entsprechende Selbstklebeprodukt zudem eine verbesserte Klebkraft (Adhäsion) auf und lassen sich aber dennoch gut wiederablösen (geringe Reißerrate), und weisen zudem weiterhin eine hohe Wärmescherfestigkeit und damit eine hohe Langzeit- und Temperaturstabilität auf, was für zahlreiche industrielle Anwendungen relevant ist.

Im Rahmen der vorliegenden Erfindung hat sich somit vor allem gezeigt, dass sich die vorteilhafte Kombination an Eigenschaften, insbesondere ein gutes Auffließvermögen, gegeben durch den Tack, eine hohe bzw. verbesserte Klebkraft (hohe Adhäsion), und dennoch ein gutes Wiederablöseverhalten (hohe Kohäsion), durch eine ausgewogene Abstimmung der einzelnen Komponenten der Haftklebemasse und trotz des hohen Anteils an Diblockcopolymer(en) in der Elastomerkomponente erreichen lässt.

Das verbesserte Eigenschaftsprofil betreffend - wie vorstehend beschrieben - insbesondere Tack, Kohäsion und Adhäsion kommt im Rahmen der vorliegenden Erfindung auf glatten, aber insbesondere auch auf rauen Oberflächen zum Tragen.

### Haftklebemasse

Unter einer Haftklebmasse wird im Einklang mit dem allgemeinen Verständnis eine Klebmasse verstanden, die bereits unter relativ schwachem Andruck eine dauerhafte Verbindung mit fast allen Haftgründen erlaubt und ggf. nach Gebrauch im Wesentlichen rückstandsfrei vom Haftgrund wieder abgelöst werden kann. Eine Haftklebmasse wirkt bei Raumtemperatur permanent haftklebrig, weist also eine hinreichend geringe Viskosität und damit ein gewisses initiales Auffließvermögen (auch Anfassklebrigkeit genannt) auf, so dass sie die Oberfläche des jeweiligen Klebegrunds bereits bei geringem Andruck benetzt. Die Verklebbarkeit der Klebmasse beruht auf ihren initialen adhäsiven Eigenschaften (dem Tack) und die Wiederablösbarkeit auf ihren kohäsiven Eigenschaften.

### a) Elastomerkomponente

Erfindungsgemäß eignen sich Formulierungen, die zu mindestens 28 Gew.-% und höchstens 60 Gew.-%, bevorzugt zwischen 35 Gew.-% und 58 Gew.-%, sehr bevorzugt zwischen 40 Gew.-% und 52 Gew.-%, eine Elastomerkomponente enthalten, wobei die Elastomerkomponente zu mindestens 60 Gew.-%, bevorzugt zu mindestens 70 Gew.-% und sehr bevorzugt zu zumindest 80 Gew.-%, und bevorzugt bis zu 100 Gew.-%, denkbar sind auch bis zu 90 Gew.-%, insbesondere bis zu 95 Gew.-%, bezogen auf die Elastomerkomponente, wenigstens ein hydriertes Polyvinylaromat-Polydien-Blockcopolymer enthält.

Die Elastomerkomponente enthält 30 bis 64 Gew.-% oder zumindest 60 Gew.-% und bevorzugt höchstens 90 Gew.-% wenigstens eines hydrierten Polyvinylaromat-Polydien-Blockcopolymers, das einen linearen ABA-Aufbau oder linearen (AB)ₙZ-Aufbau mit n = 2 oder radialen (AB)ₙ-Aufbau oder radialen (AB)ₙZ-Aufbau mit n ≥ 3 aufweist. Vinylaromaten zum Aufbau des Blocks A umfassen bevorzugt Styrol, α-Methylstyrol und/oder andere Styrol-Derivate. Der Block A kann somit als Homo- oder Copolymer vorliegen. Besonders bevorzugt ist der Block A ein Polystyrol. Blockcopolymere dieser Art bilden das Rückgrat der Formulierung. Sie bilden einen wesentlichen Teil, über den Einfluss auf die Klebeeigenschaften und auch die Reißerbeständigkeit und damit das Ablöseverhalten genommen wird. Jedoch kann ein zu hoher Anteil oder eine ungünstige Wahl der Molmasse an Blockcopolymeren dieser Art die Klebkraft reduzieren. Um diese Eigenschaften optimal auszubalancieren, hat es sich gezeigt, dass Blockcopolymere dieser Art ein Peak-Molekulargewicht von mindestens etwa 100.000 g/mol und höchstens etwa 500.000 g/mol haben sollten. Je höher das Molekulargewicht, desto herausfordernder zeigt sich die Verarbeitbarkeit des Materials. Daher wird ein Peak-Molekulargewicht von höchstens 250.000 g/mol bevorzugt. Sehr vorteilhaft sind lineare Triblockcopolymere oder radiale Blockcopolymere mit einem Peak-Molekulargewicht zwischen 100.000 g/mol und 200.000 g/mol, insbesondere zwischen 100.000 g/mol und 180.000 g/mol.

Um ein anforderungsgerechtes Eigenschaftsprofil zu erreichen, wird ein Minimum von 18 Gew.-% an Polyvinylaromaten-Anteil in dem zumindest einen Blockcopolymer dieser Art ausgewählt. Dieser sollte allerdings wiederum auch nicht zu hoch sein, da bei einem zu hohen Anteil die Klebkraft reduziert wird. Vorteilhaft ist es, wenn der Polyvinylaromaten-Anteil nicht höher als 35 Gew.-% liegt. Günstig ist ein Polyvinylaromaten-Anteil in einem Bereich zwischen 20 Gew.-% und 33 Gew.-%. Der Anteil an Polyvinylaromaten in den hydrierten Polyvinylaromaten-Polydien-Blockcopolymeren kann beispielsweise mittels ¹H-oder ¹³C-NMR (Kernspinresonanzspektroskopie, Test IX) bestimmt werden. Der Anteil an Polyvinylaromaten kann für kommerziell erhältliche hydrierte Polyvinylaromat-Polydien-Blockcopolymeren auch den Herstellerangaben entnommen werden.

Die in der erfindungsgemäßen Haftklebemasse eingesetzten hydrierten Polyvinylaromat-Polydien-Blockcopolymere sind bevorzugt solche, die durch anionische Polymerisation und sequenzielle Zugabe der Monomere für die jeweiligen Polymerblöcke, Vinylaromaten für die A-Blöcke und Diene für die B-Blöcke, erhalten werden. In vielen Herstellverfahren werden Diblockzwischenprodukte AB unter Verwendung eines Kopplungsagenzes Z' zu Triblockcopolymeren (2 AB + Z' → AB-Z-BA) oder radialen Copolymeren gekoppelt. Anschließend werden die B-Blöcke selektiv hydriert, so dass vorzugsweise Ethylen und Butylen oder Ethylen und Propylen als B-Blöcke resultieren.

Bevorzugt werden Blockcopolymere, die in Bezug auf die Polydien-Blöcke (B-Blöcke) im Wesentlichen vollständig hydriert sind, eingesetzt. Der Ethylen-Anteil in den B-Blöcken liegt bevorzugt bei mindestens 50 Gew.-%.

Gemäß bevorzugter Ausführungsformen der Erfindung ist die in der Haftklebemasse enthaltene Elastomerkomponente nicht in den Vinylaromatenblöcken sulfoniert.

Um das geforderte Eigenschaftsprofil zur erreichen, hat es sich als vorteilhaft erwiesen, wenn die Elastomerkomponente der erfindungsgemäßen Haftklebemasse mindestens 36 Gew.-%, bevorzugt 36 bis 70 Gew.-%, und weiter bevorzugt maximal 50 Gew.-% bezogen auf die Elastomerkomponente der zumindest einen Sorte des hydrierten Diblockcopolymers enthält.

Die gemäß iii. und iv. definierten und enthaltenen Polymerblöcke können sich beispielsweise hinsichtlich der Molmasse und/oder der Zusammensetzung unterscheiden.

Besonders bevorzugt beträgt der Anteil des hydrierten Diblockcopolymers in der Elastomerkomponente nicht mehr als 45 Gew.-% bezogen auf das Gesamtgewicht der Elastomerkomponente. Hiermit wird ein besonders gutes Wiederablöseverhalten, insbesondere durch eine geringe Reißerrate, erzielt.

Über hydrierte Diblockcopolymere kann vorteilhaft Einfluss auf die Klebkraft und das Auffließverhalten genommen werden.

In einer bevorzugten Ausführungsform weist das zumindest eine Diblockcopolymer ein Peak-Molekulargewicht, bestimmt mittels GPC, von < 100.000 g/mol auf.

In einer weiterhin bevorzugten Ausführungsform weist das zumindest eine Diblockcopolymer ein Peak-Molekulargewicht, bestimmt mittels GPC, von größer 100.000 g/mol auf.

Die Elastomerkomponente enthält gemäß bevorzugter Ausführungsformen zudem ein weiteres hydriertes Polyvinylaromat-Polydien-Blockcopolymer, das sich durch einen linearen ABA-Aufbau sowie linearen (AB)ₙZ-Aufbau mit n = 2 oder radialen (AB)ₙ-Aufbau sowie radialen (AB)ₙZ-Aufbau mit n ≥ 3 auszeichnet. Dieses Blockcopolymer kann einen Polyvinylaromaten-Anteil von kleiner 18 Gew.-% oder mehr und unabhängig davon ein Peak-Molekulargewicht von mehr als 500.000 g/mol oder weniger als 100.000 g/mol oder dazwischen aufweisen. Sie kann auch mehrere dieser Art enthalten.

Hierdurch weist die Haftklebemasse eine verbesserte Verarbeitbarkeit auf.

Die genannten hydrierten Polyvinylaromat-Polybutadien-Blockcopolymere umfassen wie ausgeführt Blöcke B, welche gummiartig sind und auch Elastomerblöcke oder Weichblöcke genannt werden, und Blöcke A oder A', welche glasartig sind und auch Hartblöcke genannt werden.

Die A-Blöcke und A'-Blöcke haben bevorzugt eine Glasübergangstemperatur von mindestens 25 °C, insbesondere mindestens 50 °C.

Für die B-Blöcke und B'-Blöcke ist eine Glasübergangstemperatur von maximal -25 °C, insbesondere maximal -50 °C, bevorzugt.

Diese Angaben beziehen sich auf die reinen, unabgemischten Blockcopolymere und werden erfindungsgemäß mittels DSC ermittelt, wie im Methodenteil näher beschrieben.

### b) Klebharzkomponente

Die erfindungsgemäße Haftklebemasse enthält weiterhin eine Klebharzkomponente.

Die Klebharzkomponente ist insbesondere ein oder mehrere Klebharze.

Die Klebharzkomponente ist im Rahmen der vorliegenden Erfindung nicht als Verstärkungskomponente zu verstehen, d.h. die Klebharzkomponente ist bevorzugt im Wesentlichen nicht mit den Hartblöcken der Polydien-Blockcopolymere verträglich.

Das oder die Klebharze sind daher so ausgewählt, dass sie hauptsächlich mit den durch die B-Blöcke dominierten Bereiche der Haftklebemasse mischbar (verträglich, kompatibel) sind.

Die Klebharzkomponente wird insbesondere eingesetzt, um die Adhäsion in gewünschter Weise einzustellen. Unter einem "Klebharz" wird entsprechend dem allgemeinen Verständnis des Fachmanns ein oligomeres oder polymeres Harz verstanden, das die Adhäsion, also die Eigenklebrigkeit der Haftklebemasse im Vergleich zu einer kein Klebharz enthaltenden, ansonsten aber identischen Haftklebemasse erhöht. Klebharze sind spezielle Verbindungen mit im Vergleich zu den Elastomeren niedriger Molmasse, üblicherweise mit einem gewichtsmittleren Molekulargewicht M_{w} von kleiner 5.000 g/mol. Typischerweise beträgt das gewichtsmittlere Molekulargewicht einer im Rahmen der vorliegenden Erfindung verwendeten Klebharzkomponente von 400 bis 5.000 g/mol, bevorzugt von 500 bis 2.000 g/mol, bestimmt durch GPC (Test Ib).

Der Anteil an Klebharzkomponente in der Haftklebemasse wirkt sich positiv auf die Verklebungsfestigkeit aus. Daher sollte der Klebharzanteil nicht zu gering sein. Es hat sich allerdings gezeigt, dass ein zu hoher Anteil an Klebharz(en) einen negativen Einfluss auf die Wärmescherfestigkeit und insbesondere auf die Wiederablösbarkeit hat.

Der Anteil der Klebharzkomponente, bezogen auf das Gesamtgewicht der Haftklebemasse, beträgt bevorzugt 28 Gew.-% bis 55 Gew.-%, vorzugsweise 35 Gew.-% bis 50 Gew.-%.

Zumindest ein Klebharz zeichnet sich weiterhin dadurch aus, dass es eine Erweichungstemperatur nach der Ring-und-Kugel-Methode von größer 95 °C, aber nicht mehr als 135 °C aufweist. Die Erweichungstemperatur kann dabei gemäß Test IV wie unten beschrieben bestimmt werden. Bevorzugt weisen alle Klebharze in der Klebharzkomponente eine Erweichungstemperatur in diesem Bereich auf.

Vorzugweise ist das wenigstens eine Klebharz der Klebharzkomponente ausgewählt aus der Gruppe bestehend aus Harzen auf Basis des Dicyclopentadiens, Kohlenwasserstoffharzen auf Basis von C₅, C₅/C₉- oder C₉-Monomerströmen, Polyterpenharzen auf Basis von α-Pinen und/oder β-Pinen und/oder δ-Limonen und Polymerisaten reiner C₈- oder C₉-Aromaten, wobei das Harz partiell oder insbesondere vollständig hydriert ist.

Unter "partiell hydriert" ist im Rahmen der vorliegenden Erfindung ein Hydrierungsgrad von mindestens 80 %, vorzugsweise mindestens 85 % zu verstehen.

Die erfindungsgemäße Klebemasse weist vorzugsweise wenigstens ein Klebharz in der Klebharzkomponente auf, das einen DACP (diacetone alcohol cloud point) von wenigstens 30 °C, vorzugsweise von wenigstens 40 °C aufweist. Der DACP wird dabei gemäß Test V, wie unten beschrieben, bestimmt.

In einer weiterhin bevorzugten Ausführungsform umfasst die erfindungsgemäße Haftklebemasse in der Klebharzkomponente wenigstens ein Klebharz, das einen MMAP (mixed methylcyclohexane aniline point) von größer 60 °C, vorzugsweise größer 70 °C aufweist. Der MMAP wird gemäß Test VI wie unten beschrieben bestimmt.

Die Klebharzkomponente kann neben dem zumindest einen zuvor beschriebenen Klebharz auch ein weiteres oder mehrere weitere Klebharze enthalten, die nicht den angegebenen Definitionen hinsichtlich Erweichungstemperatur und/oder DACP- und/oder MMAP-Trübungspunkt entsprechen. So sind auch Klebharze mit einer Erweichungstemperatur unterhalb 95 °C wie etwa 90 °C oder etwa 85 °C zu einem Anteil in Bezug auf die Zusammensetzung der Klebharzkomponente von bis zu 10 Gew.-% oder sogar bis zu 20 Gew.-% einsetzbar. So sind auch Klebharze mit einer Erweichungstemperatur oberhalb 135 °C wie etwa 140 °C zu einem Anteil in Bezug auf die Zusammensetzung der Klebharzkomponente von bis zu 10 Gew.-% oder sogar bis zu 20 Gew.-% einsetzbar.

Es sind auch Klebharze mit einem MMAP-Trübungspunkt unterhalb 60 °C oder sogar unterhalb 45 °C und/oder einem DACP-Trübungspunkt unterhalb 30 °C oder sogar unterhalb 15 °C mit einem Anteil in Bezug auf die Zusammensetzung der Klebharzkomponente von bis zu 20 Gew.-% oder sogar bis zu 40 Gew.-% einsetzbar. Beispiele für solche Klebharze sind Terpenphenolharze insbesondere mit einer OH-Zahl von höchstens 100 mg KOH / g und Kolophoniumester, die teilweise hydriert, vollhydriert oder disproportioniert sein können.

### c) Weichmacherkomponente

Neben der Elastomerkomponente und der Klebharzkomponente kann die erfindungsgemäße Haftklebemasse weiterhin eine Weichmacherkomponente enthalten. Der Anteil an Weichmacherkomponente, bezogen auf das Gesamtgewicht der Haftklebemasse, beträgt dabei bevorzugt 2 bis 25 Gew.-%, besonders bevorzugt 2 bis 20 Gew.-%, ganz besonders bevorzugt 4 bis 15 Gew.-%. Es hat sich überraschend gezeigt, dass ein bereits geringer Weichmacherkomponentenanteil in den genannten Mengen ausreichend ist, um eine Haftklebemasse mit einer ausreichend hohen Verklebungsfestigkeit zu erhalten, was im Gegensatz zu dem steht, was der Stand der Technik lehrt, wo zum Teil von einem Gehalt an Weichmachern von 60 bis 95 Gew.-% ausgegangen wird.

Die Weichmacherkomponente ist ein oder mehrere Weichmacher.

Der Weichmacher ist vorzugsweise ausgewählt aus der Gruppe bestehend aus Ethylen/Propylen-Copolymer, Ethylen/Butylen-Copolymer, Butylen/iso-Butylen-(Co)-Polymer, Butylenhomopolymer und iso-Butylenhomopolymer, wobei jeweils die amorphen Vertreter bevorzugt sind.

In einer weiterhin bevorzugten Ausführungsform weist der Weichmacher eine gewichtsmittlere Molekularmasse, bestimmt mittels GPC (Test Ib), von mindestens 100.000 g/mol und höchstens 1.000.000 g/mol auf. In diesen Fällen ist der Weichmacher vorzugweise ein Ethylen/Propylen-Copolymer oder Ethylen/Butylen-Copolymer mit linearer oder radialer Struktur. Diese als Weichmacherkomponente enthaltenden Copolymere sind im Rahmen der vorliegenden Erfindung keine Blockcopolymere, die Hartblöcke enthalten.

In einer weiteren besonders bevorzugten Ausführungsform weist der Weichmacher eine gewichtsmittlere Molmasse, bestimmt mittels GPC (Test I), von mindestens 3.000 g/mol und höchstens 20.000 g/mol auf. In diesem Fall handelt es sich bei dem Weichmacher vorzugsweise um ein Butylen/iso-Butylen-(Co)-Polymer.

Geeignet sind auch Weichharze auf Basis von Kolophonium, insbesondere Methylestern des Kolophoniums oder des teil- oder vollhydrierten Kolophoniums.

### d) Verstärkungskomponente

Die erfindungsgemäße Haftklebemasse enthält optional, aber bevorzugt, eine Verstärkungskomponente.

Die Verstärkungskomponente ist im Rahmen der vorliegenden Erfindung nicht als Klebharzkomponente zu verstehen, d.h. die Verstärkungskomponente ist bevorzugt im Wesentlichen nicht mit den Weichblöcken, d.h. den hydrierten Polydien-Blöcken verträglich.

Als Verstärkungskomponente werden erfindungsgemäß insbesondere sogenannte Endblockverstärker eingesetzt.

Unter Endblockverstärkern sind solche Materialien zu verstehen, die im Wesentlichen mit den Hartblöcken der hydrierten Polydien-Blockcopolymere verträglich sind.

Das wenigstens eine Harz der Verstärkungskomponente ist vorzugsweise wenigstens ein Harz basierend auf wenigstens einer, insbesondere aromatischen, Kohlenwasserstoffverbindung, die bevorzugt ausgewählt ist aus der Gruppe bestehend aus Styrol, alpha-Methylstyrol, para-Methylstyrol und Copolymeren daraus. Unter "Copolymeren daraus" ist eine Kohlenwasserstoffverbindung zu verstehen, die auf einer Mischung mindestens zweier der zuvor genannten Monomere basiert.

Das wenigstens eine Harz der Verstärkungskomponente weist vorzugsweise ein gewichtsmittleres Molekulargewicht M_{w} von 1.000 g/mol bis 15.000 g/mol, bevorzugt 2.000 g/mol bis 10.000 g/mol, bestimmt mittels GPC (Test Ib), auf.

Das wenigstens eine Harz der Verstärkungskomponente weist einen MMAP-Trübungspunkt (Mixed Methylcyclohexan Anilin Cloud Point, Test VI) von -10 °C bis +30 °C, bevorzugt von 0 °C bis +20 °C, auf.

Der Erweichungspunkt des wenigstens einen Harzes der Verstärkungskomponente liegt bei mindestens 140 °C, bevorzugt bei mindestens 150 °C, bestimmt gemäß Test IV.

Der Anteil der Verstärkungskomponente, bezogen auf das Gesamtgewicht der Haftklebemasse liegt bevorzugt bei mindestens 2,5 Gew.-% und höchstens 22 Gew.-%, sehr bevorzugt bei mindestens 4 Gew.-% und höchstens 18 Gew.-%.

Unter dem Ausdruck "im Wesentlichen unverträglich" oder "im Wesentlichen nicht verträglich" wird im Rahmen der vorliegenden Erfindung insbesondere verstanden, dass die angesprochenen Bestandteile bzw. Komponenten zu höchstens 10 Gew.-%, bevorzugt zu höchstens 5 Gew.-%, miteinander mischbar sind.

Unter dem Ausdruck "im Wesentlichen verträglich" wird im Rahmen der vorliegenden Erfindung insbesondere verstanden, dass die angesprochenen Bestandteile bzw. Komponenten zu mindestens 90 Gew.-%, bevorzugt zu mindestens 95 Gew.-%, miteinander mischbar sind.

### e) weitere Zuschlagstoffe

Um das Eigenschaftsprofil der erfindungsgemäßen Haftklebemasse weiter anzupassen, können der Haftklebemasse weitere Zuschlagstoffe beigefügt werden. Dabei handelt es sich vorzugsweise um solche, die ausgewählt sind aus der Gruppe bestehend aus primären Antioxidantien wie sterisch gehinderten Phenolen, sekundären Antioxidantien wie Phosphite oder Thioether, Prozessstabilisatoren wie C-Radikalfänger, Lichtschutzmitteln wie UV-Absorber oder sterisch gehinderten Aminen, Verarbeitungshilfsmitteln und weiteren Elastomeren wie solche auf Basis reiner Kohlenwasserstoffe wie ungesättigte Polydiene, natürliche oder synthetisch erzeugte Polyisoprene oder Polybutadiene, chemisch im wesentlich gesättigte Elastomere, wie gesättigte Ethylen-Propylen-Copolymere, α-Olefincopolymere, Polyisobutylen, Butylkautschuk, Ethylen-Propylenkautschuk und funktionalisierte Kohlenwasserstoffe wie halogenhaltige, acrylathaltige oder vinyletherhaltige Polyolefine. Des Weiteren können organische oder anorganische Füllstoffe eingesetzt werden sowie Farbstoffe und Farbpigmente. Die Haftklebemasse kann entsprechend schwarz, grau, weiß oder farbig sein.

### Selbstklebeprodukte

Ein weiterer Gegenstand der vorliegenden Erfindung ist wie ausgeführt ein durch dehnendes Verstrecken wiederablösbares Selbstklebeprodukt, das zumindest eine Schicht einer erfindungsgemäßen Haftklebemasse aufweist.

Das erfindungsgemäße Selbstklebeprodukt kann dabei einseitig oder beidseitig, d.h. doppelseitig, klebend ausgestaltet sein, wobei die klebende Schicht bevorzugt jeweils aus der erfindungsgemäßen Haftklebemasse gebildet wird.

Ferner weist das erfindungsgemäße Selbstklebeprodukt zumindest eine Lage eines temporären Trägermaterials ("Trennliner") auf.

Bei diesem temporären Trägermaterial handelt es sich insbesondere um ein filmförmiges Material, von dem eine Haftklebemasseschicht abgelöst werden kann, so dass der übrige Teil des Selbstklebebands anschließend mit einem zu verklebenden Substrat oder einem anderen Material, das mit dem übrigen Teil des Selbstklebebands einen Verbund bilden soll, in Kontakt gebracht werden kann.

Bei dem temporären Trägermaterial handelt es sich insbesondere um ein Trennpapier oder eine Trennfolie auch Trenn- oder Releaseliner genannt, jedenfalls um ein nicht fest mit der Haftklebemasseschicht verbundenes Material, das insbesondere abhäsiv ausgerüstet ist, so dass ein Ablösen einer Haftklebemasseschicht von ihm ermöglicht wird. Es stellt daher ein Hilfsmittel zu dessen Herstellung, Lagerung oder für die Weiterverarbeitung beispielsweise durch Stanzen dar.

Unter Verwendung der zumindest einen vorgenannten Haftklebemasse ist das erfindungsgemäße Selbstklebeprodukt gemäß bevorzugter Ausführungsformen der Erfindung
- ein einschichtiges, beidseitig selbstklebendes Klebeband, bestehend aus einer einzigen Schicht der erfindungsgemäßen Haftklebemasse und damit ein, sogenanntes "Transfertape", oder
- ein mehrschichtiges, beidseitig selbstklebendes Klebeband, bei denen die Schichten jeweils aus der erfindungsgemäßen Haftklebemasse bestehen, oder
- ein mehrschichtiges, beidseitig selbstklebendes Klebeband mit einem Permanentträger, der entweder in einer Schicht aus der erfindungsgemäßen Haftklebemasse oder zwischen zwei Schichten aus der erfindungsgemäßen Haftklebemasse angeordnet ist,
- ein mehrschichtiges, einseitig selbstklebendes Klebeband mit einer Schicht aus der erfindungsgemäßen Haftklebemasse und einem Permanentträger,
- jeweils in Kombination mit einem temporären Trägermaterial.

Gemäß bevorzugter Ausführungsformen der Erfindung weist das durch dehnende Verstrecken wiederablösbare Selbstklebeprodukt zumindest eine Lage eines dehnbaren Permanentträgermaterials auf.

Ein Gegenstand der vorliegenden Erfindung ist daher auch ein Selbstklebeprodukt mit einem temporären Trägermaterial und einem Permanentträger, auf den mindestens eine Schicht der erfindungsgemäßen Haftklebemasse aufgebracht ist.

Ebenfalls Gegenstand der Erfindung ist ein Selbstklebeprodukt mit einem temporären Trägermaterial und einem Permanentträger, auf den auf beiden Seiten eine Schicht erfindungsgemäßer Haftklebemasse aufgebracht ist, wobei die beiden Schichten aus gleicher oder verschiedenen Haftklebemassen bestehen können. Darüber hinaus ist Gegenstand der Erfindung ein Selbstklebeband mit einem temporären Trägermaterial und einem Permanentträger, auf den auf einer Seite eine Schicht einer erfindungsgemäßen Haftklebemasse aufgebracht ist und auf der anderen Seite eine weitere, nicht erfindungsgemäße Klebemasse aufgebracht ist. Letztere kann haftklebrig oder nicht haftklebrig beziehungsweise heißsiegelfähig sein.

Dabei können die doppelseitigen Produkte also einen symmetrischen oder einen asymmetrischen Produktaufbau aufweisen.

Bevorzugt sind auch einschichtige, beidseitig selbstklebende Klebebänder aus einer einzigen Schicht einer erfindungsgemäßen Haftklebemasse in Kombination mit einem temporären Trägermaterial.

Bevorzugt ist zudem eine Ausführungsform des Selbstklebeprodukts, bei dem der Permanentträger nur aus einer einzigen Schicht aus einer Polymerfolie besteht.

Weiterhin ist ein Selbstklebeprodukt bevorzugt, welches mehrschichtig, einseitig aus wenigstens einer Schicht aus der erfindungsgemäßen Haftklebemasse und einem Permanentträger aufgebaut ist. Die erfindungsgemäße Haftklebemasse stellt dabei bevorzugt die nach außen gerichtete klebrige Schicht des Selbstklebeproduktes dar, sodass sie -unabhängig von einem temporären Trägermaterial - zur Verklebung auf ein Substrat zur Verfügung steht.

Bei dem Permanentträger sämtlicher Ausführungsformen handelt es sich vorzugweise um eine Folie, insbesondere eine dehnfähige Folie.

Insbesondere vom erfinderischen Gedanken umfasst sind Aufbauten mit einem dehnbaren Permanentträger in der Mitte des Selbstklebeproduktes, insbesondere in der Mitte einer einzigen Schicht der erfindungsgemäßen Haftklebemasse, wobei die Dehnbarkeit des Zwischenträgers ausreichend sein muss, um ein Ablösen des Klebstreifens durch dehnendes Verstrecken zu gewährleisten. Als Permanentträger können zum Beispiel sehr dehnfähige Folien dienen. Beispiele für vorteilhaft einsetzbare dehnbare Permanentträger sind transparente Ausführungen aus WO 2011/124782 A1, DE 10 2012 223 670 A1, WO 2009/114683 A1, WO 2010/077541 A1, WO 2010/078396 A1.

Der Permanentträger braucht aber nicht transparent zu sein. Er kann vor allem auch schwarz, grau, weiß oder farbig sein.

Zur Herstellung der Permanentträgerfolie werden filmbildende oder extrusionsfähige Polymere eingesetzt, die zusätzlich mono- oder biaxial orientiert sein können.

Gemäß bevorzugter Ausführungsformen ist das dehnbare Permanentträgermaterial eine dehnfähige Folie.

Gemäß bevorzugter Ausführungsformen ist die Folie aus wenigstens einem Polyolefin. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern wie zum Beispiel die Erweichungstemperatur und/oder die Reißfestigkeit.

Vorzüglich lassen sich zudem Polyurethane als Ausgangsmaterialien für dehnbare Permanentträgerschichten verwenden. Polyurethane sind chemisch und/oder physikalisch vernetzte Polykondensate, die typischerweise aus Polyolen und Isocyanaten aufgebaut werden. Je nach Art und Einsatzverhältnis der einzelnen Komponenten sind dehnbare Materialien erhältlich, die im Sinne dieser Erfindung vorteilhaft eingesetzt werden können. Rohstoffe, die dem Formulierer hierzu zur Verfügung stehen, sind zum Beispiel in EP 0 894 841 B1 und EP 1 308 492 B1 genannt.

Dem Fachmann sind weitere Rohstoffe bekannt, aus denen erfindungsgemäße Permanentträgerschichten aufgebaut werden können. Polyesterpolyurethane, Polyetherpolyurethane und Polycaprolactonpolyurethane seien hier als Beispiele für Polyurethane genannt, die vorteilhaft im Sinne dieser Erfindung als Grundmaterial für Permanentträger genutzt werden können.

Weiterhin ist es vorteilhaft, auf Ethylenvinylacetat-Copolymere (EVA) basierende Materialien in Permanentträgerschichten einzusetzen, um Dehnbarkeit zu realisieren.

Bevorzugt ist daher ein erfindungsgemäßes Selbstklebeprodukt, welches als dehnbares Permanentträgermaterial wenigstens eine dehnfähige Folie aufweist, welche bevorzugt aus wenigstens einem Material ist, welches ausgewählt ist aus der Gruppe bestehend aus Polyolefinen, wie Ethylen, Propylen, Butylen und Hexylen, Polyurethanen, Polyesterpolyurethanen, Polyetherpolyurethanen, Polycaprolactonpolyurethanen, Ethylenvinylacetat-Copolymeren (EVA) und auf Kautschuk basierenden Materialien.

Weiterhin bevorzugt handelt es sich bei dem Träger um einen Schaumträger, besonders bevorzugt um einen Schaumträger aus einem PE- oder PU-Schaum. Dabei kann der Schaum jede bekannte Form von Schaumzellen aufweisen also offenzellig oder geschlossenzellig sein. Die Schäumung kann durch chemische oder physikalische Schäumungsmittel erzeugt worden sein, durch Einschlagen von Gas oder insbesondere Luft ("Frothing") oder durch Einbringen von Hohlkugeln, ohne dass diese Aufzählung abschließend ist, sondern lediglich als Beispiel zu verstehen ist. Spezifische Beispiele sind Glashohlkugeln, keramische Hohlkugeln, Metallhohlkugeln und expandierte, expandierbare und vorexpandierte Mikroballons. Kombinationen verschiedener genannter und weiterer Schäumungsmethoden sind ebenfalls möglich.

Zur Herstellung eines Permanentträgers kann es auch hier angebracht sein, Additive und weitere Komponenten hinzuzugeben, die die filmbildenden Eigenschaften verbessern, sofern vorhanden und gewünscht die Neigung zur Ausbildung von kristallinen Segmenten vermindern und/oder die mechanischen Eigenschaften gezielt verbessern oder auch gegebenenfalls verschlechtern.

Die Permanentträger können mehrlagig ausgestaltet sein.

Des Weiteren können die Permanentträger Deckschichten aufweisen, beispielsweise Sperrschichten, die ein Eindringen von Komponenten aus der Klebemasse in den Permanentträger oder umgekehrt unterbinden. Diese Deckschichten können auch Barriereeigenschaften haben, um so ein Durchdiffundieren von Wasserdampf und/oder Sauerstoff zu verhindern.

Zur besseren Verankerung der Haftklebemassen auf dem Permanentträger können die Permanentträger mit den bekannten Maßnahmen wie Corona, Plasma oder Flammen vorbehandelt werden. Auch die Nutzung eines Primers ist möglich. Idealerweise kann aber auf eine Vorbehandlung verzichtet werden.

Die Rückseite des Permanentträgers kann einer antiadhäsiven physikalischen Behandlung oder Beschichtung unterzogen sein.

Die Dicke der Permanentträgerschicht liegt typischerweise im Bereich von 10 bis 200 µm, bevorzugt zwischen 20 und 100 µm.

Die Spannung ("Stripkraft", Test VII) bei 50 % Dehnung sollte kleiner als 20 N/cm sein, bevorzugt kleiner als 10 N/cm, um ein einfaches Ablösen ohne allzu großen Kraftaufwand zu ermöglichen.

Besonders vorteilhaft ist ein Selbstklebeprodukt bestehend aus
- einem einschichtigen Permanentträger, vorzugsweise aus Polyurethan, wobei der Träger eine Reißdehnung von mindestens 100 %, vorzugsweise mindestens 300 %, und gegebenenfalls ein Rückstellvermögen von über 50 % (Test VIII) aufweist, wobei
- auf den Träger beidseitig jeweils eine Schicht aus einer erfindungsgemäßen Haftklebemasse aufgebracht ist, wobei vorzugsweise die Zusammensetzung der Haftklebemassen identisch ist.

Weiterhin besonders vorteilhaft ist ein Selbstklebeprodukt bestehend aus
- einem einschichtigen Permanentträger, vorzugsweise enthaltend Polyolefin, wobei der Träger eine Reißdehnung von mindestens 100 %, vorzugsweise mindestens 300 %, und gegebenenfalls ein Rückstellvermögen von weniger 50 % (Test VIII) aufweist, wobei
- auf den Träger beidseitig jeweils eine Schicht aus einer erfindungsgemäßen Haftklebemasse aufgebracht ist, wobei vorzugsweise die Zusammensetzung der Haftklebemassen identisch ist.

Die allgemeinen Ausdrücke "Selbstklebeprodukt" und "selbstklebendes Klebeband" umfassen im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Zuschnitte, Stanzlinge oder Etiketten.

Das Selbstklebeprodukt weist somit eine Längsausdehnung und eine Breitenausdehnung auf. Das Klebeband weist auch eine senkrecht zu beiden Ausdehnungen verlaufende Dicke auf, wobei die Breitenausdehnung und Längsausdehnung um ein Vielfaches größer sein können als die Dicke. Die Dicke ist über die gesamte durch Länge und Breite bestimmte Flächenausdehnung des Selbstklebeprodukts möglichst gleich, vorzugsweise im Wesentlichen gleich.

Typische Konfektionierformen des erfindungsgemäßen Selbstklebeproduktes sind Klebebandrollen sowie Selbstklebestreifen, wie sie zum Beispiel in Form von Stanzlingen erhalten werden.

Vorzugsweise weisen alle Schichten im Wesentlichen die Form eines Quaders auf. Weiter vorzugsweise sind alle Schichten vollflächig miteinander verbunden.

Optional kann ein nicht haftklebriger Anfasserbereich vorgesehen sein, von welchem aus der Ablöseprozess ausgeführt werden kann.

Das Selbstklebeprodukt weist vorzugsweise eine Dicke auf von 100 µm bis 2000 µm, weiter vorzugsweise von 150 bis 1500 µm, besonders vorzugsweise 200 bis 1000 µm oder 250 µm, 300 µm, 500 µm oder 750 µm, wobei das temporäre Trägermaterial nicht eingerechnet ist.

Bevorzugt ist eine Ausführungsform des Selbstklebeprodukts, bei dem der Permanentträger eine Dicke zwischen 20 und 120 µm, bevorzugt 30 µm bis 80 µm, aufweist und identische erfindungsgemäße Haftklebemasseschichten auf dem Permanentträger jeweils eine Dicke zwischen 20 und 200 µm, bevorzugt 30 µm bis 100 µm, aufweisen.

Bevorzugt ist zudem eine Ausführungsform des Selbstklebeprodukts, bei dem kein Permanentträger enthalten ist und eine erfindungsgemäße Haftklebemasse als singuläre Schicht auf einem temporären Trägermaterial vorliegt. Die Haftklebemasseschicht weist bevorzugt eine Dicke zwischen 100 µm und 2000 µm, insbesondere zwischen 150 µm und 1500 µm oder zwischen 200 µm und 1200 µm auf.

Vorzugsweise lässt sich das erfindungsgemäße durch dehnendes Verstrecken wiederablösbare Selbstklebeprodukt entfernen, indem dieses bevorzugt im Wesentlichen in der Verklebungsebene, das heißt bei einem Abzugswinkel von etwa 0°, dehnend verstreckt wird, wodurch es sich rückstands- und zerstörungsfrei wiederablösen lässt.

Eine Entfernung ist aber auch unter anderen Abzugswinkeln wie 45° oder 90° möglich.

### Herstellverfahren

Die Haftklebemasse für das erfindungsgemäße Selbstklebeprodukt wird entweder auf eine Seite eines temporären Trägermaterials oder auf eine Seite eines Permanentträgers aufgebracht. Die Haftklebemasse kann nach dem Fachmann bekannten Verfahren auf den Träger aufgebracht werden, beispielsweise mittels Rakelverfahren, Düsenrakelverfahren, Rollstabdüsenverfahren, Extrusionsdüsenverfahren, Gießdüsen- und Gießverfahren. Ebenfalls erfindungsgemäß sind Auftragsverfahren wie Walzenauftragsverfahren, Druckverfahren, Siebdruckverfahren, Rasterwalzenverfahren, Inkjetverfahren und Sprühverfahren.

Eine bevorzugte Beschichtungsvariante ist lösemittelbasiert. Hierzu werden die Bestandteile der Haftklebemasse(n) in einem geeigneten Lösemittel oder Lösemittelgemisch aufgelöst und dann aus Lösung beschichtet und das beschichtete Material getrocknet. Geeignete Lösemittel, die auch in Kombination eingesetzt werden können, sind aliphatische (beispielsweise Pentan, Hexan, Heptan, Octan und deren Strukturisomere), cycloaliphatische (beispielsweise Cyclohexan und Methylcyclohexan) und aromatische Kohlenwasserstoffe (beispielsweise Toluol, Xylol), insbesondere in Kombination mit Ketonen (beispielsweise Aceton, 2-Butanon, iso-Butylketon) oder Estern (beispielsweise Ethylacetat, Butylacetat, Propylacetat, iso-Propylacetat). In vorteilhafter Vorgehensweise wird eine Mischung aus Toluol und Ethylacetat verwendet. Sehr vorteilhaft ist eine Mischung aus Methylcyclohexan und einem Ester wie Ethylacetat oder insbesondere Butylacetat. Vorteilhaft ist zudem eine Mischung aus Cyclohexan und einem Ester, insbesondere Butylacetat.

Eine weitere bevorzugte Herstellvariante sind Hotmelt-Verfahren, bei denen die Haftklebemasse mittels eines Compoundieraggregats gemischt und insbesondere direkt im Anschluss ("inline") mittels Extrusion und/oder Düse und/oder Kalander auf das Trägermaterial aufgebracht wird. Es muss sich bei dem Verfahren zum Aufbringen jedoch nicht um eine Direktbeschichtung handeln. Die Haftklebemasse kann auch zunächst anderweitig beschichtet werden und in einem zweiten Schritt auf den Träger kaschiert werden. Gegebenenfalls können weitere Schichten oder Materiallagen anschließend inline oder offline zukaschiert oder beschichtet werden, so dass auch mehrschichtige /-lagige Produktaufbauten erzeugt werden können. Solche weiteren Schichten können spezielle zusätzliche Eigenschaften in das Selbstklebeprodukt einbringen wie zum Beispiel die mechanischen Eigenschaften. Sie können auch die Verankerung zwischen Klebemasse und Träger fördern oder die Migration einzelner Bestandteile aus einer Schicht in die andere unterdrücken.

Für Produktaufbauten mit Permanentträger kann eine Haftklebemasseschicht durch direkte Beschichtung auf das Permanentträgermaterial oder durch Laminierung, insbesondere Heißlaminierung erfolgen.

### Verwendung

Die erfindungsgemäßen Selbstklebeprodukte eignen sich hervorragend für die langzeitstabile Permanentverklebung, bei denen ein Bauteil mit rauer Oberfläche zum Einsatz kommt sowie eine Trennbarkeit gefordert wird.

Bedarf nach Trennbarkeit einer Permanentverklebung kann zu Umarbeitungszwecken (falls eine Verklebung im Herstellprozess eines Gegenstands korrigiert werden soll), zu Reparaturzwecken (falls ein schadhaftes Bauteil des Verklebungsverbunds ausgetauscht werden soll) oder zu Recyclingzwecken (falls nach Nutzungsdauer des Verklebungsverbunds sortenrein entsorgt werden soll) bestehen. Selbstklebeprodukte mit den hier beschriebenen Haftklebemassen haben sich darüber hinaus insbesondere in Verbindung mit polaren Oberflächen, wie Stahl, und auch niedrigenergetischen Oberflächen wie PP/EPDM, PP/EPM und PP/EPR als vorteilhaft erwiesen. Daher ist ein weiterer Gegenstand der vorliegenden Erfindung die Verwendung der erfindungsgemäßen Haftklebemasse oder des erfindungsgemäßen Klebebands zur Verklebung eines Substrats enthaltend Ethylen(Co)-Polymer, Propylen(Co)-Polymer, EPR, EPM und/oder EPDM oder auch eines anderen Kunststoffs. Insbesondere wird die erfindungsgemäße Haftklebemasse oder das erfindungsgemäße Klebeband zur Verklebung eines Anbauteils enthaltend Ethylen(Co)-Polymer, Propylen(Co)-Polymer, EPR, EPM und/oder EPDM oder auch eines anderen Kunststoffs wie ABS oder Polycarbonat in oder an einem Automobil/Fahrzeug verwendet. Die Langlebigkeit der erfindungsgemäßen Haftklebemasse erlaubt auch die Verklebung anderer Materialien wie Glas, Keramik und Metall.

Daher ist ein weiterer Gegenstand der vorliegenden Erfindung die Verwendung der erfindungsgemäßen Haftklebemasse oder des erfindungsgemäßen Klebebands zur Verklebung von anderen Substraten wie insbesondere anderen Kunststoffen und Metallen.

Ein weiterer Gegenstand der vorliegenden Erfindung ist somit auch ein verklebter Verbund umfassend wenigstens ein erfindungsgemäßes Selbstklebeprodukt und wenigstens ein Substrat, das mit zumindest einer Haftklebeschicht des Selbstklebeprodukts in Kontakt ist.

Ein weiterer Gegenstand der vorliegenden Erfindung ist ein verklebter Verbund umfassend wenigstens zwei Substrate und wenigstens ein erfindungsgemäßes Selbstklebeprodukt, welches die beiden Substrate miteinander verklebt.

Ein weiterer Gegenstand der vorliegenden Erfindung ist ein Verbund eines einseitig selbstklebenden Produkts und einem Substrat, das mit zumindest einer Haftklebeschicht des einseitig selbstklebenden Produkts in Kontakt ist.

Für die Substrate und das Selbstklebeprodukt gelten sämtliche obigen Ausführungen.

Die vorliegende Erfindung wird anhand der folgenden Beispiele näher erläutert, wobei diese keinesfalls als Einschränkung des Erfindungsgedanken zu verstehen sind.

### Testmethoden

Die Messungen werden - soweit nicht ausdrücklich anders erwähnt - bei einem Prüfklima von 23 ± 1 °C und 50 ± 5 % relativer Luftfeuchte durchgeführt.

### Test I - Molmasse (GPC)

### (a) Peakmolmasse von einzelnen Blockcopolymermoden

Polymere sind im Hinblick auf die Molmassenverteilung polymodale Systeme. Mischungen aus verschiedenen Polymeren können als multimodale Systeme, wobei jedes Polymer eine eigene Molmassenverteilung einbringt, aufgefasst werden. Mischungen von Blockcopolymeren mit Strukturen unterschiedlicher Molmassenverteilung können ebenfalls als multimodale Systeme aufgefasst werden. Jedes Blockcopolymer bringt dann eine eigene Molmassenverteilung ein. Der Einfachheit werden diese hier Blockcopolymermode genannt.

GPC bietet sich als messtechnisches Verfahren zur Bestimmung der Molmasse einzelner Polymermoden in Gemischen verschiedener Polymere an. Für die im Sinne dieser Erfindung einsetzbaren durch lebende, anionische Polymerisation hergestellten Blockcopolymere sind die Molmassenverteilungen typischerweise ausreichend eng, so dass Polymermoden, die sich Triblockcopolymeren, Diblockcopolymeren oder Multiblockcopolymeren zuordnen lassen, ausreichend voneinander aufgelöst im Elugramm auftreten. Es lässt sich dann die Peakmolmasse für die einzelnen Polymermoden aus den Elugrammen ablesen.

Peakmolmassen (Peak-MM) werden mittels Gelpermeationschromatographie (GPC) bestimmt. Als Eluent wird THF eingesetzt. Die Messung erfolgt bei 23 °C. Als Vorsäule wird PSS-SDV, 5 µ, 10³ Å, ID 8,0 mm × 50 mm verwendet. Zur Auftrennung werden die Säulen PSS-SDV, 5 µ, 10³ Å sowie 10⁴ Å und 10⁶ Å mit jeweils ID 8,0 mm × 300 mm eingesetzt. Die Probenkonzentration beträgt 4 g/l, die Durchflussmenge 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt. (µ = µm; 1 Å = 10⁻¹⁰ m).

### (b) gewichtsmittlere Molmasse insbesondere von Weichmachern, Klebharzen und Endblockverstärkern

Das gewichtsmittlere Molekulargewicht MW wird mittels Gelpermeationschromatographie (GPC) bestimmt. Als Eluent wird THF eingesetzt. Die Messung erfolgt bei 23 °C. Als Vorsäule wird PSS-SDV, 5 µ, 10³ Å, ID 8,0 mm x 50 mm verwendet. Zur Auftrennung werden die Säulen PSS-SDV, 5 µ, 10³ Å sowie 10⁴ Å und 10⁶ Å mit jeweils ID 8,0 mm × 300 mm eingesetzt. Die Probenkonzentration beträgt 4 g/l, die Durchflussmenge 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt.

### Test II - Klebkraft Stahl

Die Bestimmung der Klebkraft (gemäß AFERA 5001) wird wie folgt durchgeführt. Als definierter Haftgrund wird eine polierte Stahlplatte mit einer Stärke von 2 mm eingesetzt. Das zu untersuchende verklebbare Flächenelement (500 µm Haftklebeschicht als Transferklebeschicht wird mit einer 75 µm Polyester-Folie rückseitig verstärkt) wird, falls nicht anderweitig angegeben, auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wird das verklebbare Flächenelement in einem Winkel von 180° vom Haftgrund mit einem Zugprüfungsgerät (Firma Zwick) mit einer Geschwindigkeit v = 300 mm/min abgezogen und die hierfür bei Raumtemperatur benötigte Kraft gemessen. Der Messwert (in N/cm) ergibt sich als Mittelwert aus drei Einzelmessungen.

### Test III - Reißerbeständigkeit

Für die Reißerbeständigkeitstests wurden folgendermaßen Klebebandmuster hergestellt. Haftklebebeschichtungen in 500 µm wurden als einschichtige Klebestreifenmuster getestet. Aus dem zu untersuchenden Klebeband werden 10 Streifen in jeweils 12 mm Breite und 55 mm Länge präpariert, welche an einer Seite über eine Länge von 10 mm als gleichschenkliges Dreieck ausgeformt sind.

Diese Streifen werden derart auf einer Länge von 45 mm auf eine mit Ethanol vorgereinigte, getrocknete und konditionierte Polycarbonatplatte geklebt, so dass ein 10 mm langer Anfasser übersteht, der dem über das gleichschenklige Dreieck angespitzten Seite gegenüber liegt, also am rechteckigen Ende des Streifens. Eine zweite Polycarbonat-Platte wird auf die zweite Fläche der verklebten Streifen aufgebracht, und zwar so, dass die beiden Polycarbonat-Platten bündig übereinander liegen. Der Verbund wird mit einer 4 kg Rolle 10-fach überrollt (fünfmal hin und zurück). Nach 24 h Aufziehzeit werden die Streifen am Anfasser manuell im 180°-Winkel aus der Klebfuge gestrippt.

Es wird bewertet, wie viele Muster rückstandsfrei wieder abgelöst werden können. Reißerbeständigkeit wird prozentual im Hinblick auf gerissene Klebestreifen angegeben. 0 % entspricht dabei dem Fall, dass von 10 Klebestreifen keiner beim durch dehnendes Verstrecken durchgeführten Ablöseversuch gerissen ist. 80 % entspricht dabei dem Fall, dass von 10 Klebestreifen 8 Klebestreifen beim durch dehnendes Verstrecken durchgeführten Ablöseversuch gerissen sind.

Verbünde wurden vor der Reißerbeständigkeitsmessung bei 23 °C und 50 % relativer Luftfeuchtigkeit für 24 h rekonditioniert.

### Test IV - (Kleb)Harzerweichungstemperatur

Für Einzelsubstanzen: Die (Kleb)Harzerweichungstemperatur (Erweichungspunkt; Erw.-Punkt) wird nach der einschlägigen Methodik durchgeführt, die als Ring & Ball bekannt ist und nach ASTM E28 standardisiert ist.

### Test V - DACP

In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5 %, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99 %, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Firma Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

### Test VI - MMAP

In ein trockenes Probenglas werden 5,0 g Testsubstanz (das zu untersuchende Klebharzmuster) eingewogen und mit 10 mL trockenem Anilin (CAS [62-53-3], ≥ 99,5 %, Sigma-Aldrich #51788 oder vergleichbar) und 5 mL trockenem Methylcyclohexan (CAS [108-87-2], ≥ 99 %, Sigma-Aldrich #300306 oder vergleichbar) versetzt. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Firma Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der MMAP-Wert desto höher ist die Aromatizität der Testsubstanz.

### Test VII - Stripkraft

Die Ablösekraft (Stripkraft beziehungsweise Stripspannung) wird mit einer Probe des zu untersuchenden Gegenstandes, insbesondere Selbstklebeproduktes bzw. Permanentträgers, mit den Abmessungen 50 mm Länge × 20 mm Breite mit einem am oberen Ende nicht haftklebrigem Anfasserbereich ermittelt. Die Probe wird zwischen zwei deckungsgleich zueinander angeordneten Stahlplatten mit einer Abmessung von 50 mm × 30 mm mit einem Anpressdruck von jeweils 50 Newton verklebt. Die Stahlplatten haben an ihrem unteren Ende je eine Bohrung zur Aufnahme eines S-förmigen Stahlhakens. Das untere Ende des Stahlhakens trägt eine weitere Stahlplatte, über die die Prüfanordnung zur Messung in der unteren Klemmbacke einer Zugprüfmaschine fixiert werden kann. Die Verklebungen werden für eine Dauer von 24 Stunden bei +40 °C gelagert. Nach der Rekonditionierung auf Raumtemperatur wird der Probenstreifen mit einer Zuggeschwindigkeit von 1000 mm pro Minute parallel zur Verklebungsebene und kontaktfrei zu den Kantenbereichen der beiden Stahlplatten herausgelöst. Dabei wird die erforderliche Ablösekraft in Newton (N) gemessen. Angegeben wird der Mittelwert der Stripspannungswerte (in N pro mm²), gemessen in dem Bereich, in welchem das Selbstklebeprodukt auf einer Verklebungslänge zwischen 10 mm und 40 mm von den Stahluntergründen abgelöst ist.

### Test VIII - Dehnbarkeit, Rückstellvermögen

Zur Messung des Rückstellvermögens werden die jeweiligen Gegenstände, insbesondere Selbstklebeprodukt oder Permanentträger, um 100 % gedehnt, in dieser Dehnung für 30 s gehalten und dann entspannt. Nach einer Wartezeit von 1 min wird erneut die Länge gemessen.

Das Rückstellvermögen berechnet sich nun wie folgt: RV = ((L₁₀₀ - L_{end} )/L₀ )·100 mit RV = Rückstellvermögen in %.

L₁₀₀: Länge des Klebestreifens nach der Dehnung um 100 % L₀: Länge des Klebestreifens vor der Dehnung L_{end}: Länge des Klebestreifens nach der Relaxation von 1 min.

Das Rückstellvermögen entspricht dabei der Elastizität.

Die Reißdehnung, die Zugfestigkeit und die Spannung bei 50 % Dehnung werden in Anlehnung an DIN 53504 unter Verwendung von Schulterstäben der Größe S3 bei einer Separationsgeschwindigkeit von 300 mm pro Minute gemessen. Das Prüfklima beträgt 23 °C und 50 % rel. Luftfeuchtigkeit.

### Test IX - Polyvinylaromaten-Anteil

Der Anteil an Polyvinylaromaten-Blöcken in hydrierten Polyvinylaromat-Polydien-Blockcopolymeren wird, sofern nicht anderweitig bekannt, mittels ¹³C-NMR bestimmt. Am Beispiel der Bestimmung des Polystyrol-Anteils in hydrierten Polystyrol-Polydien-Blockcopolymeren (SEBS) wird die ¹³C-NMR im Folgenden erläutert. Aus dem ¹³C-Spektrum wird der Mittelwert aus zwei Integralen gebildet, nämlich dem Styrol-C-Signal bei ca. 144 bis 146 ppm und dem Styrol-CH bei ca. 125 bis 127 ppm entsprechend. Dieser Mittelwert wird für SEBS in Relation zum Butylen-Integral (hydrierte 1,2-Polybutadien-Wiederholungseinheiten), nämlich dem CH3-Signal bei ca. 10 ppm, und zum Ethylen-Integral (hydrierte 1,4-Polybutadien-Wiederholungseinheiten), den man aus dem gesamtolefinischen Integral bei ca. 20 bis 50 ppm ausrechnen kann, gesetzt. Die so erhaltenen Anteile in mol-% werden dann in Gew.-% umgerechnet.

### Test X - Probe-Tack - mittels Texture Analyser

Mit der hier beschriebenen Probe-Tack-Methode wird das Verklebungsverhalten einer Haftklebemasse oder auch eines ein- bzw. beidseitig klebenden Selbstklebebands charakterisiert. Sie ist ein Maß für das initiale Auffließverhalten der Haftklebemasse auf ein zu verklebendes Substrat. Die Tackmessung wird nach der einschlägigen Methodik durchgeführt, die in Anlehnung an ASTM D2979-01 standardisiert ist. Das Prüfgerät ist der Texture Analyser TA.XT von Stable Micro Systems Ltd.. Eine Sonde mit zylindrischem Stempel aus rostfreiem Stahl wird mit vorgegebener Testgeschwindigkeit bis zu einer definierten Andruckkraft senkrecht auf die Klebmasse gefahren und nach einer definierten Kontaktzeit wieder mit ebenfalls vorgegebener Geschwindigkeit abgezogen. Während dieses Vorganges wird die zum Andrücken bzw. Ablösen aufgewendete Kraft als Funktion des Wegs registriert. Die variablen Prüfparameter, die mit dem Prüfmerkmal angegeben werden müssen, wurden entsprechend der zu untersuchenden Muster angepasst: Stempelgeometrie: Ø 2mm, Andruckkraft 1 N, Kontaktzeit 0,01 s und Abzugsgeschwindigkeit 1,5 mm/s. Der Stahlstempel wird vor der Prüfung eines Klebemusters in Aceton gereinigt und für 30 Minuten bei Raumtemperatur konditioniert. Während der einzelnen Messungen an unterschiedlichen Stellen eines Prüfmusters wird der Stempel nicht gereinigt. Als Untergrund-Prüfplatte wurde eine Stahlplatte mit polierter Edelstahloberfläche verwendet, auf die die zu untersuchenden Muster (500 µm Transferklebeband) auflaminiert wurden. Prüfklima: Raumtemperatur 23 +/- 3 °C, relative Luftfeuchtigkeit 50 +/- 5%.

Das Ergebnis ist der Mittelwert der Maximalkraft (Fₘₐₓ) jeder einzelnen Kurve bestimmt aus 5 Einzelmessungen und wird in N angegeben.

### Test XI - SAFT

Der SAFT-Test (SAFT = "Shear Adhesion Failure Temperature") dient der Schnellprüfung der Scherfestigkeit von Klebeformulierungen unter Temperaturbelastung und damit der Überprüfung der Wärmescherfestigkeit. Dafür wird ein zu untersuchendes Prüfmuster auf eine temperierbare Stahlplatte geklebt, mit einem Gewicht (50 g) belastet und die Scherstrecke aufgezeichnet.

### Messprobenpräparation:

Das zu untersuchende Prüfmuster (500 µm Transfertape wird mit einer der Klebemassenseiten auf eine 50 µm dicke Aluminiumfolie geklebt) wird auf eine Größe von 10 mm * 50 mm geschnitten.

Die zugeschnittene Klebebandprobe wird mit der anderen Klebemassenseite auf eine polierte, mit Aceton gereinigte Prüfplatte (Werkstoff 1.4301, DIN EN 10088-2, Oberfläche 2R, Oberflächen-Rauigkeit Ra = 30 bis 60 nm, Abmessungen 50 mm * 13 mm * 1,5 mm) derart verklebt, dass die Verklebungsfläche der Probe Höhe * Breite = 13 mm * 10 mm beträgt und die Prüfplatte am oberen Rand um 2 mm überragt. Anschließend wird mit einer 2 kg-Stahlrolle und einer Geschwindigkeit von 10 m/min zur Fixierung sechsmal überrollt. Die Probe wird oben bündig mit einem stabilen Klebestreifen verstärkt, der als Auflage für den Wegmessfühler dient. Dann wird die Probe mittels der Platte derart aufgehängt, dass das länger überstehende Ende des Prüfmusters senkrecht nach unten zeigt.

### Messung:

Die zu messende Probe wird am unteren Ende mit einem Gewicht von 50 g belastet. Die Prüfplatte mit der verklebten Probe wird beginnend bei 25 °C mit einer Rate von 9 K/min auf die Endtemperatur von 200 °C aufgeheizt.

Beobachtet wird der Rutschweg der Probe mittels Wegmessfühler in Abhängigkeit von Temperatur und Zeit. Der maximale Rutschweg ist auf 1000 µm (1 mm) festgelegt, bei Überschreiten wird der Test abgebrochen und die Versagenstemperatur notiert. Prüfklima: Raumtemperatur 23 +/- 3 °C, relative Luftfeuchtigkeit 50 +/- 5%. Das Ergebnis ist der Mittelwert aus zwei Einzelmessungen und wird in °C angegeben.

Der SAFT-Test gilt im Rahmen der vorliegenden Erfindung dann als bestanden, wenn die Versagenstemperatur größer als 110 °C betragen hat.

### Test XII - DSC

Glasübergangspunkte - synonym als Glasübergangstemperaturen bezeichnet - insbesondere von Polymeren bzw. Polymerblöcken werden angegeben als Ergebnis von Messungen mittels Dynamischer Differenzkalorimetrie DDK (englisch Dynamic Scanning Calorimetry; DSC) gemäß der DIN 53 765, insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg. Auch die Schmelztemperatur bzw. Erweichungstemperatur von Polymeren bzw. Polymerblöcken wird auf diese Weise ermittelt.

### I. Verwendete Rohmaterialien

**Tabelle 1: verwendete Chemikalien**

| **Komponente** | **Chemikalie** | **Beschreibung** | **Hersteller** |
|---|---|---|---|
| Elastomer | Kraton@ G1654 | SEBS; | Kraton Corp. |
| | | PS-Anteil 31 Gew.-%; | |
| | | Diblock-Anteil: 0 Gew.-% | |
| | | Peak-Mw*: 160.000 g/mol | |
| | Kraton^{®} G1726 | SEBS; | Kraton Corp. |
| | | PS-Anteil 30 Gew.-%; | |
| | | Diblock-Anteil: 70 Gew.-% | |
| | | Peak-Mw*: 65.000 g/mol | |
| Harz | Regalite^{®} R1125 | C₉ KW-Harz; | Synthomer |
| | | Erw.-Punkt: 125°C | |
| | | MMAP: 88 °C | |
| | | DACP: 56 °C | |
| | | Vollhydriert | |
| | Foral^{®} 105E | Pentaerythritester des hydrierten Kolophoniums | Synthomer |
| | | Erw.-Punkt: 105°C | |
| | | MMAP: 16°C | |
| | | DACP: -50 °C | |
| Weichmacher | TerPIB 2600 | Polybuten | ter Hell |
| | | Peak-Mw: 11.000 g/mol | |
| | | Mw: 9.200 g/mol | |
| Verstärkungskomponente | Endex 155 | Aromatisches KW-Harz | Synthomer |
| | | Erw.-Punkt: 153 °C | |
| | | Mw: 6.600 g/mol | |
| | | MMAP: 15°C | |
| Zuschlagstoffe | Irganox^{®} 1726 | Alterungsschutzmittel | BASF |

| | |
|---|---|
| SEBS: | Styrol-Ethylen/Butylen-Styrol-Blockcopolymer |
| PS-Anteil: | Polystyrolanteil |
| Peak-Mw: | Peak-Molekulargewicht |
| Peak-Mw*: | Peak-Molekulargewicht des Triblockcopolymers |
| KW-Harz: | Kohlenwasserstoffharz |
| Erw.-Punkt: | Erweichungspunkt |
| Mw: | gewichtsmittleres Molekulargewicht |

### II. Versuche

Es wurde eine Reihe von Testklebebandmustern erzeugt.

### Herstellverfahren (Hotmelt-Verfahren):

Die lösungsmittelfreie Herstellung von Haftklebeformulierungen erfolgte mittels eines Planetwalzenextruders (PWE), welcher einen Einzugsbereich und zwei Verfahrensteile umfasste. Die Anlaufringe hatten in Verfahrensrichtung einen zunehmenden Durchmesser.

Obwohl unterschiedliche Spindelbestückungen geeignet waren, wurden Bestückungen bevorzugt, welche im ersten Verfahrensteil mindestens ¾ der maximalen Bestückungszahl betrugen. Die Elastomerkomponenten und die Verstärkerkomponente wurden im Einzug des PWEs dosiert. Die Harzkomponenten wurden aufgeschmolzen und im ersten Verfahrensteil des PWEs zugegeben. Besonders geeignet zur Herstellung von homogenen Mischungen war ein Harz-Split, in dem ein Teil des Harzes im Einzugsbereich zugegeben wurde und der Rest downstream im ersten Verfahrensteil. Besonders geeignet war dabei die Zugabe beider Anteile flüssig über Sidefeed oder Anlaufringe, wobei der erste Anteil ca. 30 Gew.-% der gesamten Harzmenge beträgt, und soweit nicht anders angegeben, wurde das Verfahren so ausgeführt. Geeignet wäre auch die Zugabe des ersten Harzanteils fest im Einzug des PWEs oder über Sidefeed im Einzugsbereich.

Die Beschichtung erfolgte durch Einführung des heißen Haftklebemassencompounds in einen 2-Walzenkalander auf eine Dicke von 500 µm.

Dann wurden die Tabelle 2 aufgeführten Eigenschaften anhand von 500 µm dicken Transfer-Klebebändern getestet.

Mit "E" gekennzeichnete Beispiele sind erfindungsgemäße Beispiele. Mit "V" gekennzeichnete Beispiele sind Vergleichsbeispiele.

**Tabelle 2**

| | | Beispiel E1 | Beispiel V1 | Beispiel E2 |
|---|---|---|---|---|
| (a) Elastomerkomponente | Kraton G1654 | 19,5 Gew.-% | 24,3 Gew.-% | 13,5 Gew.-% |
| | Kraton G1726 | 29,1 Gew.-% | 24,3 Gew.-% | 31,5 Gew.-% |
| Diblock-Anteil | | 41,9 Gew.-% | 35,0 Gew.-% | 49,0 Gew-% |
| Elastomer-Anteil | | 48,6 Gew.-% | 48,6 Gew.-% | 45,0 Gew-% |
| (b) Klebharzkomponente | Regalite R1125 | 10,7 Gew.-% | 10,7 Gew.-% | 11,5 Gew.-% |
| | Foral 105E | 25,0 Gew.-% | 25,0 Gew.-% | 27,0 Gew.-% |
| Summe Klebharz | | 35,7 Gew.-% | 35,7 Gew.-% | 38,5 Gew.-% |
| (c) Weichmacherkomponente | terPib 2600 | 9,2 Gew.-% | 9,2 Gew.-% | 10,0 Gew.-% |
| (d) Verstärkungskomponente | Endex 155 | 4,5 Gew.-% | 4,5 Gew.-% | 4,5 Gew.-% |
| (e) Zuschlagstoffe | Irganox 1726 | 1,0 Gew.-% | 1,0 Gew.-% | 1,0 Gew.-% |
| | Schwarzpigment | 1,0 Gew.-% | 1,0 Gew.-% | 1,0 Gew.-% |
| | | | | |
| Reißerrate | | 0 % | 0 % | 20 % |
| Klebkraft 180° (Stahl)** | | 33,1 N/cm | 27,0 N/cm | 37,7 N/cm |
| Tack (Fₘₐₓ) | | 3,6 N | 3,4 N | 3,9 N |
| SAFT | | Bestanden | Bestanden | Bestanden |

Wie anhand der Daten in Tabelle 2 erkennbar, weisen die erfindungsgemäßen Beispiele E1 und E2 gegenüber dem Vergleichsbeispiel V1 eine Verbesserung im Tack, und damit dem initialen Auffließvermögen, auf. Gleichzeitig zeigen E1 und E2 eine Verbesserung in der Klebkraft und damit der Adhäsion.

Dabei lassen sich die entsprechenden Klebebänder, hier die 500 µm dicken Transferklebebänder der jeweiligen Masse, weiterhin gut, also mit einer geringen Reißerrate ablösen, was für eine hohe Kohäsion spricht.

Im Zielkonflikt aus Adhäsion, Kohäsion und Tack weisen die erfindungsgemäßen Beispiele damit ein optimiertes Verhalten auf und ermöglichen somit verbesserte wiederablösbare Selbstklebeprodukte.

Insbesondere zeigt sich trotz der hohen Klebkraft eine geringe Reißerrate.

Das beste Eigenschaftsprofil wird unter diesem Gesichtspunkt bei dem Beispiel E1 erreicht.

Die erfindungsgemäßen Beispiele zeigen zudem weiterhin eine gute Wärmescherfestigkeit, wie anhand des bestandenen SAFT-Tests erkennbar.

## Patentansprüche

1. Haftklebemasse enthaltend:
a) mindestens 28 Gew.-% und höchstens 60 Gew.-% einer Elastomerkomponente, wobei
i. die Elastomerkomponente 30 bis 64 Gew.-% oder zumindest 60 Gew.-% und bevorzugt höchstens 90 Gew.-%, jeweils bezogen auf die Elastomerkomponente, wenigstens ein hydriertes Polyvinylaromat-Polydien-Blockcopolymer mit einem Polyvinylaromatenanteil von mindestens 18 Gew.-% und einem Peak-Molekulargewicht von 100.000 bis 500.000 g/mol, bestimmt gemäß GPC (Test la), enthält,
ii. die Polydien-Blöcke im Wesentlichen voll hydriert sind,
iii. das hydrierte Polyvinylaromat-Polydien-Blockcopolymer einen ABA-Aufbau, (AB)ₙZ-Aufbau mit n = 2 oder radialen (AB)ₙ-Aufbau oder radialen (AB)ₙ-Z-Aufbau mit n ≥ 3 aufweist, wobei A = Polyvinylaromat, B = Ethylen und Butylen oder Ethylen und Propylen und Z = Derivat einer Kopplungssubstanz sind und wobei der Ethylen-Anteil in den B-Blöcken bevorzugt mindestens 50 Gew.-% beträgt, und
iv. die Elastomerkomponente zumindest 36 Gew.-%, bevorzugt 36 bis 70 Gew.-%, und bevorzugt maximal 50 Gew.-%, zumindest einer Sorte eines hydrierten Diblockcopolymers mit einem A'B`-Aufbau oder (A'B')ₙZ-Aufbau mit n = 1 enthält, wobei A' = Polyvinylaromat, B' = Ethylen und Butylen oder Ethylen und Propylen, Z = Derivat einer Kopplungssubstanz ist und A' = A und B' = B sein kann,
b) eine Klebharzkomponente,
c) optional eine Weichmacherkomponente,
d) optional mindestens 2,5 Gew.-% bis 22 Gew.-%, bevorzugt mindestens 4 Gew.-% bis zu 18 Gew.-%, einer Verstärkungskomponente, die wenigstens ein Harz mit einem MMAP-Wert zwischen -10 °C und +30 °C, bevorzugt zwischen 0 °C und +20 °C, und einem Erweichungspunkt von mindestens 140 °C ist,
e) optional weitere Zuschlagsstoffe,
wobei sich der Anteil der Elastomerkomponente auf das Gesamtgewicht der Haftklebemasse bezieht.

2. Haftklebemasse nach Anspruch 1 enthaltend:
c) eine Weichmacherkomponente zu mindestens 2 Gew.-% und nicht mehr als 25 Gew.-%.

3. Haftklebemasse nach Anspruch 1 oder 2, **dadurch gekennzeichnet, dass** der Anteil an Elastomerkomponente in der Schicht der Haftklebemasse 35 Gew.-% bis 58 Gew.-%, beträgt, vorzugsweise 40 Gew.-% bis 52 Gew.-%, jeweils bezogen auf das Gesamtgewicht der Haftklebemasse.

4. Haftklebemasse nach einem der vorherigen Ansprüche, **dadurch gekennzeichnet, dass** die Polyvinylaromat-Polydien-Blockcopolymere einen Polyvinylaromatenteil von 18 Gew.-% bis 35 Gew.-%, vorzugsweise von 20 Gew.-% bis 33 Gew.-%, aufweisen.

5. Haftklebemasse nach einem der vorherigen Ansprüche, **dadurch gekennzeichnet, dass** das wenigstens eine Harz der Verstärkungskomponente wenigstens ein Harz basierend auf wenigstens einer, insbesondere aromatischen, Kohlenwasserstoffverbindung ist, die bevorzugt ausgewählt ist aus der Gruppe bestehend aus Styrol, alpha-Methylstyrol, para-Methylstyrol und Copolymeren daraus, wobei das wenigstens eine Harz der Verstärkungskomponente vorzugsweise ein gewichtsmittleres Molekulargewicht M_{w} von 1.000 g/mol bis 15.000 g/mol, bevorzugt 2.000 g/mol bis 10.000 g/mol aufweist, bestimmt mittels GPC.

6. Haftklebemasse nach einem der vorherigen Ansprüche, **dadurch gekennzeichnet, dass** die Elastomerkomponente maximal 45 Gew.-%, bezogen auf die Elastomerkomponente, der zumindest einen Sorte des hydrierten Diblockcopolymers enthält.

7. Haftklebemasse nach Anspruch 6,
**dadurch gekennzeichnet, dass** das zumindest eine Diblockcopolymer ein Peak-Molekulargewicht, bestimmt mittels GPC, von < 100.000 g/mol aufweist.

8. Haftklebemasse nach einem der vorherigen Ansprüche, **dadurch gekennzeichnet, dass** der Anteil an Klebharzkomponente 28 bis 55 Gew.-%, vorzugsweise 35 Gew.- bis 50 Gew.-%, jeweils bezogen auf das Gesamtgewicht der Haftklebemasse, beträgt.

9. Haftklebemasse nach einem der vorherigen Ansprüche, **dadurch gekennzeichnet, dass** das wenigstens eine Klebharz der Klebharzkomponente ausgewählt ist aus der Gruppe bestehend aus Harzen auf Basis des Dicyclopentadiens, Kohlenwasserstoffharzen auf Basis von C₅, C₅/C₉- oder C₉-Monomerströmen, Polyterpenharzen auf Basis von α-Pinen und/oder β-Pinen und/oder δ-Limonen und Polymerisaten reiner C₈- oder C₉-Aromaten, wobei das Harz partiell oder insbesondere vollständig hydriert ist.

10. Haftklebemasse nach einem der vorherigen Ansprüche,
**dadurch gekennzeichnet, dass** der Anteil an Weichmacherkomponente in der Haftklebemasse 2 bis 20 Gew.-%, besonders bevorzugt 4 bis 15 Gew.-%, beträgt, jeweils bezogen auf das Gesamtgewicht der Haftklebemasse.

11. Haftklebemasse nach einem der vorherigen Ansprüche, **dadurch gekennzeichnet, dass** die Weichmacherkomponente wenigstens ein Weichmacher ist, der ausgewählt ist aus der Gruppe bestehend aus Ethylen/Propylen-Copolymer, Ethylen/Butylen-Copolymer und Butylen/iso-Butylen-(Co)-Polymer.

12. Haftklebemasse nach Anspruch 11, **dadurch gekennzeichnet, dass** der Weichmacher eine gewichtsmittlere Molmasse von mindestens 3.000 g/mol und höchstens 20.000 g/mol aufweist und ein Butylen/iso-Butylen-(Co)-Polymer ist.

13. Durch dehnendes Verstrecken wiederablösbares Selbstklebeprodukt, das zumindest eine Schicht einer Haftklebemasse nach einem der Ansprüche 1 bis 12 sowie zumindest eine Lage eines temporären Trägermaterials aufweist.

14. Durch dehnendes Verstrecken wiederablösbares Selbstklebeprodukt nach Anspruch 13, **dadurch gekennzeichnet, dass** das Selbstklebeprodukt zumindest eine Lage eines dehnbaren Permanentträgermaterials aufweist.

15. Durch dehnendes Verstrecken wiederablösbares Selbstklebeprodukt nach Anspruch 14, **dadurch gekennzeichnet, dass** das dehnbare Permanentträgermaterial eine dehnfähige Folie ist, welche bevorzugt aus wenigstens einem Material ist, welches ausgewählt ist aus der Gruppe bestehend aus Polyolefinen, wie Ethylen, Propylen, Butylen und/oder Hexylen, Polyurethanen, Polyesterpolyurethanen, Polyetherpolyurethanen, Polycaprolactonpolyurethanen, Ethylenvinylacetat-Copolymeren (EVA) und auf Kautschuk basierenden Materialien.

16. Durch dehnendes Verstrecken wiederablösbares Selbstklebeprodukt nach einem der Ansprüche 13 bis 15,
**dadurch gekennzeichnet, dass**
das Selbstklebeprodukt
- ein einschichtiges, beidseitig selbstklebendes Klebeband ist, bestehend aus einer einzigen Schicht der Haftklebemasse nach einem der Ansprüche 1 bis 12, oder
- ein mehrschichtiges, beidseitig selbstklebendes Klebeband ist, bei denen die Schichten jeweils aus der Haftklebemasse nach einem der Ansprüche 1 bis 12 bestehen, oder
- ein mehrschichtiges, beidseitig selbstklebendes Klebeband mit einem Permanentträger ist, der entweder in einer Schicht aus der Haftklebemasse nach einem der Ansprüche 1 bis 12 oder zwischen zwei Schichten aus der Haftklebemasse nach einem der Ansprüche 1 bis 12 angeordnet ist,
- ein mehrschichtiges, einseitig selbstklebendes Klebeband mit wenigstens einer Schicht aus der Haftklebemasse nach einem der Ansprüche 1 bis 12 und einem Permanentträger,
- jeweils in Kombination mit einem temporären Trägermaterial.

17. Durch dehnendes Verstrecken wiederablösbares Selbstklebeprodukt nach einem der Ansprüche 13 bis 16,
**dadurch gekennzeichnet, dass**
das Selbstklebeprodukt besteht aus
- einem einschichtigen Permanentträger, vorzugsweise enthaltend Polyolefin, wobei der Träger eine Reißdehnung von mindestens 100 %, vorzugsweise mindestens 300 %, und gegebenenfalls ein Rückstellvermögen von weniger 50 % aufweist, wobei
- auf den Träger beidseitig jeweils eine Schicht aus der Haftklebemasse nach einem der Ansprüche 1 bis 12 aufgebracht ist, wobei vorzugsweise die Zusammensetzung der Klebemassen identisch ist.

18. Durch dehnendes Verstrecken wiederablösbares Selbstklebeprodukt nach einem der vorherigen Ansprüche 13 bis 16,
**dadurch gekennzeichnet, dass**
das Selbstklebeprodukt besteht aus
- einem einschichtigen Permanentträger, vorzugsweise aus Polyurethan, wobei der Träger eine Reißdehnung von mindestens 100 %, vorzugsweise mindestens 300 %, und gegebenenfalls ein Rückstellvermögen von über 50 % aufweist, wobei
- auf den Träger beidseitig jeweils eine Schicht aus der Haftklebemasse nach einem der Ansprüche 1 bis 12 aufgebracht ist, wobei vorzugsweise die Zusammensetzung der Klebemassen identisch ist.

19. Verklebter Verbund umfassend wenigstens ein erfindungsgemäßes Selbstklebeprodukt nach einem der Ansprüche 13 bis 18 und wenigstens ein Substrat, das mit zumindest einer Schicht einer Haftklebemasse nach einem der Ansprüche 1 bis 12 in Kontakt ist.
